# EUROPÄISCHE PATENTANMELDUNG

(11) **EP 4 458 746 A1**
(43) Veröffentlichungstag der Anmeldung: **06.11.2024**
(21) Anmeldenummer: 23171555.8
(22) Anmeldetag: 04.05.2023
(51) Int. Cl.: B65G 54/02, B31B 50/02, B31B 50/04

(54) **TRANSPORTVORRICHTUNG UND AUFLAGE FÜR EINE DERARTIGE TRANSPORTVORRICHTUNG**

(71) Anmelder: SOMIC Verpackungsmaschinen GmbH & Co. KG, 83123 Amerang (DE)
(72) Erfinder: KÖGEL, Christoph, 83134 Prutting (DE)
(74) Vertreter: Weickmann & Weickmann PartmbB

(57) **Zusammenfassung**

Die Erfindung betrifft eine Transportvorrichtung (100) für Kartonzuschnitte und aus diesen gefaltete Kartons mit einem Mover (102) einer in Magnetschwebetechnologie ausgeführten Transportanordnung und einer mit dem Mover (102) betriebsmäßig fest verbundene Auflage (104). Die Auflage (104) weist ein Basiselement (106) mit einer Stützfläche (106a) auf, sowie wenigstens einen mit dem Basiselement (106) verbundenen Sicherungsbügel (108) und wenigstens einer Schürze (112), die sich unterhalb der Stützfläche (106a) erstreckt.

## Beschreibung

Die Erfindung betrifft eine Transportvorrichtung für Kartonzuschnitte und aus diesen gefaltete Kartons.

Derartige Transportvorrichtungen werden beispielsweise in Verpackungsmaschinen eingesetzt, welche in einer Produktionslinie gefertigte Produkte für den Versand in Kartons verpacken. Dabei werden die Kartons anfänglich als flächige Kartonzuschnitte zugeführt, aus denen dann später die Kartons gefaltet werden. Um für die Kartonzuschnitte einerseits und die gefalteten Kartons andererseits nicht gesonderte Transportvorrichtungen vorhalten zu müssen, werden Transportvorrichtungen eingesetzt, welche sowohl die Kartonzuschnitte als auch die fertig gefalteten Kartons transportieren können.

In einfachen derartigen Transportvorrichtungen werden Schleppketten eingesetzt. Dies ist ein angetriebener Riemen, welcher in fest definierten Abständen Mitnehmer aufweist, welche den Karton von Station zu Station führen. Durch derartige Schleppketten kann aber jeweils nur eine einzige Kartongröße bedient werden, da der Abstand der Mitnehmer fest vorgegeben ist.

Bei einer anderen Art gattungsgemäßer Transportvorrichtungen kommen Vakuumförderer zum Einsatz, d.h. Förderer mit Löchern, durch welche Luft von der Oberseite des Förderers zu dessen Unterseite gesaugt wird. Durch den hierdurch erzeugten Unterdruck werden auf der Oberseite des Förderers abgelegte Objekte, wie zum Beispiel Kartonzuschnitte oder Kartons, auf dem Förderer gehalten. Nachteilig ist jedoch zum einen der hohe Energieeinsatz, da der Unterdruck ineffizient durch einen großen Volumenstrom erzeugt werden muss, und zum anderen die von den hierfür eingesetzten Pumpen ausgehende hohe Geräusch- und Wärmeentwicklung.

Es ist daher Aufgabe der vorliegenden Erfindung, eine einfache und flexibel einsetzbare Transportvorrichtung bereitzustellen.

Diese Aufgabe wird erfindungsgemäß durch eine Transportvorrichtung der eingangs genannten Art gelöst, welche wenigstens einen Mover einer nicht zur Transportvorrichtung gehörenden, in Magnetschwebetechnologie ausgeführten Transportanordnung und eine mit dem Mover betriebsmäßig fest verbundene Auflage umfasst, wobei die Auflage ein Basiselement mit einer im Wesentlichen horizontalen, nach oben weisenden Stützfläche aufweist, wobei die Auflage ferner wenigstens einen mit dem Basiselement verbundenen Sicherungsbügel aufweist, und wobei an dem Basiselement ferner wenigstens eine Schürze angeordnet ist, die sich unterhalb der Stützfläche erstreckt, so dass die Transportvorrichtung im Zusammenwirken mit wenigstens einer weiteren, identisch ausgebildeten Transportvorrichtung sowohl geeignet ist, einen flächigen Kartonzuschnitt zu transportieren, als auch geeignet ist, einen aus dem Kartonzuschnitt errichteten Karton zu transportieren.

Für den Transport eines Kartonzuschnitts kann dieser auf der Stützfläche der Auflage abgelegt werden. Durch Zusammenfahren zweier, vorzugsweise identischer, Transportvorrichtungen auf entgegengesetzten Seiten eines Kartonzuschnitts kann der Kartonzuschnitt unabhängig von seiner jeweiligen Größe für den Transport sicher erfasst werden, wobei der Sicherungsbügel während des Transports einem unerwünschten Abheben des Kartonzuschnitts von der Stützfläche zuverlässig entgegenwirkt. Wurde der Kartonzuschnitt zu einem Karton gefaltet, kann dieser von den Schürzen der beiden Transportvorrichtungen erfasst und transportiert werden.

Um eine Einweisungsschräge bereitstellen zu können, die beim Zusammenfahren der beiden Transportvorrichtungen den Kartonzuschnitt sanft in Richtung Stützfläche drückt, kann der Sicherungsbügel schräg nach oben verlaufen. Dabei kann der Winkel, den der Sicherungsbügel und die Stützfläche miteinander einschließen, zwischen etwa 5° und etwa 25°, vorzugsweise etwa 15°, betragen.

Wenn ein Übergangsbereich zwischen der Stützfläche und dem Sicherungsbügel eine stumpfe Anlagefläche aufweist, kann verhindert werden, dass der Kartonzuschnitt kraftschlüssig zwischen Stützfläche und Sicherungsbügel eingeklemmt wird. Somit kann der Kartonzuschnitt durch einfaches Auseinanderfahren der beiden Transportvorrichtungen wieder freigegeben werden. Um aus unterschiedlich dicker Pappe und/oder Wellpappe gefertigte Kartonzuschnitte transportieren zu können, ohne diese zu beschädigen, kann die Höhe der Anlagefläche wenigstens 5 mm, vorzugsweise wenigstens 8 mm, betragen.

Wird der Kartonzuschnitt bei seiner Übergabe an die Faltstation mittels einer Haltevorrichtung, beispielsweise einer mit Saugköpfen ausgestatteten Haltevorrichtung, gehalten, so ist es grundsätzlich auch denkbar, dass der Kartonzuschnitt kraftschlüssig zwischen Stützfläche und Sicherungsbügel eingeklemmt wird, vorzugsweise aber derart, dass die Klemmung keine Druckmarken oder -kerben auf dem Karton hinterlässt.

Um sowohl den Kartonzuschnitt als auch den fertig gefalteten Karton ergreifen zu können, ohne den Mover drehen zu müssen, wird in Weiterbildung der Erfindung vorgeschlagen, dass die Schürze an der Seite des Basiselements angeordnet ist, in deren Richtung die offene Seite der von Stützfläche und Sicherungsbügel gebildeten V-Form weist.

Um eine möglichst gute Anpassung der Transportvorrichtung an den fertig gefalteten Karton zu ermöglichen, kann die Schürze mehrteilig ausgebildet sein. Dabei kann wenigstens ein Schürzenteil mit dem Basiselement beweglich, vorzugsweise um eine im Wesentlichen vertikal verlaufende Achse schwenkbar, verbunden sein.

Zur Erhöhung der Transportsicherheit kann die Stützfläche und/oder der Sicherungsbügel und/oder der Übergangsabschnitt und/oder die Schürze eine reibungserhöhende Beschichtung aufweisen. Diese Beschichtung kann beispielsweise von einer Gummierung und/oder einem elastisch nachgiebigen Schaum gebildet sein.

Um eine magnetische Wechselwirkung mit den Magnetfeldern der in Magnetschwebetechnologie ausgebildeten Transportanordnung, insbesondere mit den Permanentmagneten des Movers, vermeiden zu können, wird vorgeschlagen, dass die Auflage aus einem nicht magnetischen und vorzugsweise auch nicht magnetisierbaren Material gefertigt ist. Dies können beispielsweise Kunststoffe, aber auch Metalle wie Kupfer oder Aluminium sein.

Sofern die in Magnetschwebetechnologie ausgebildete Transportanordnung über eine ausreichend große steuerungstechnische Toleranz verfügt, d.h. gewisse Abweichungen der Magnetfelder steuerungstechnisch auszugleichen vermag, ist es grundsätzlich sogar denkbar, dass die Auflage ein, vorzugsweise dünnes, magnetisierbares Blech umfasst oder aus einem, vorzugsweise dünnen, magnetisierbaren Blech gefertigt ist. Dies erleichtert die Befestigung der Auflage an dem Mover, da sie durch das permanentmagnetische Feld des Movers magnetisch an diesem gehalten werden kann.

Nach einem weiteren Gesichtspunkt betrifft die Erfindung eine Auflage für eine derartige Transportvorrichtung, also eine Auflage, die dazu ausgelegt und bestimmt ist, betriebsfest mit einem für den Einsatz in einer in Magnetschwebetechnologie ausgeführten Transportanordnung ausgelegten Mover verbunden zu werden.

Die Erfindung wird im Folgenden mit Bezug auf die beigefügte Zeichnung anhand von Ausführungsbeispielen näher erläutert werden. Es stellt dar:
- Figur 1: eine perspektivische Ansicht einer ersten Ausführungsform einer erfindungsgemäßen Transportvorrichtung;
- Figur 2: eine perspektivische Ansicht zweier Transportvorrichtungen gemäß Figur 1 beim Transport eines Kartonzuschnitts;
- Figur 3: eine perspektivische Ansicht zweier Transportvorrichtungen gemäß Figur 1 beim Transport eines fertig gefalteten Kartons;
- Figuren 4 bis 7: vier schematische Seitenansichten zur Erläuterung des Einsatzes der erfindungsgemäßen Transportvorrichtung in einer Verpackungsmaschine;
- Figur 8: eine schematische Draufsicht auf die Verpackungsmaschine;
- Figur 9: eine Ansicht ähnlich Figur 1 einer abgewandelten Ausführungsform einer erfindungsgemäßen Transportvorrichtung; und
- Figur 10: eine Ansicht ähnlich Figur 8 zur Erläuterung weiterer Abwandlungen erfindungsgemäßer Transportvorrichtungen.

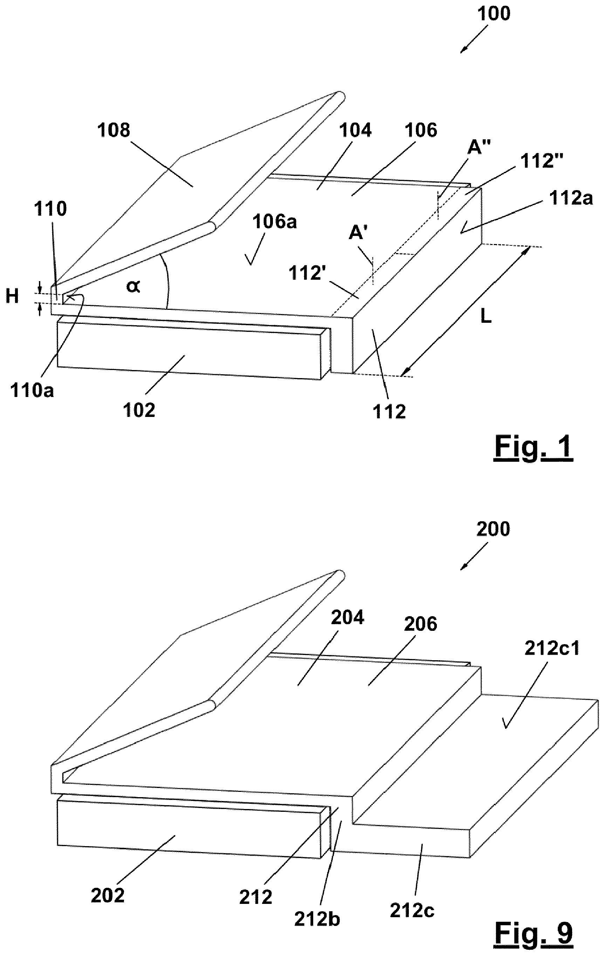

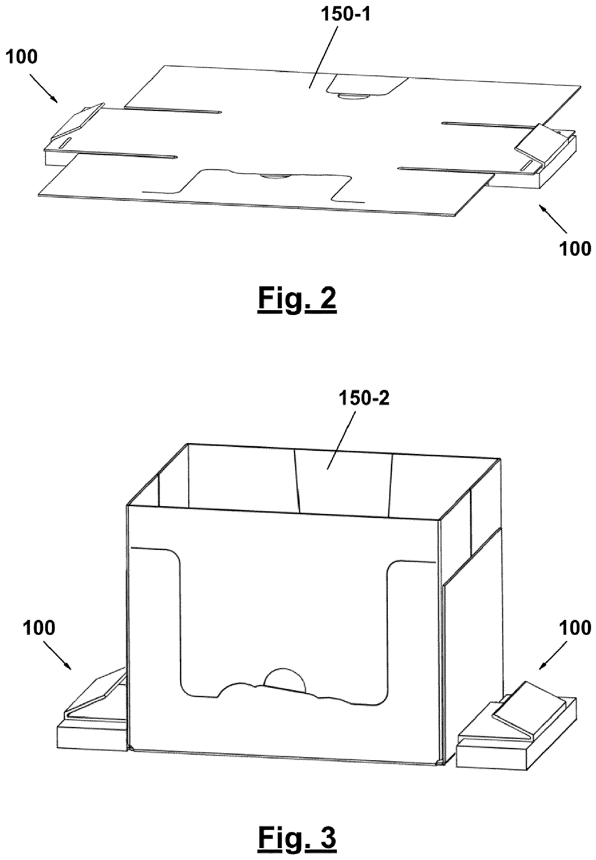

In Figur 1 ist eine erfindungsgemäße Transportvorrichtung ganz allgemein mit 100 bezeichnet. Die Transportvorrichtung 100 ist erfindungsgemäß derart ausgebildet, dass wenigstens zwei dieser Transportvorrichtungen 100 sowohl Kartonzuschnitte 150-1 (siehe Figur 2) als auch aus diesen Kartonzuschnitten 150-1 fertig gefaltete Kartons 150-2 (siehe Figur 3) transportieren können.

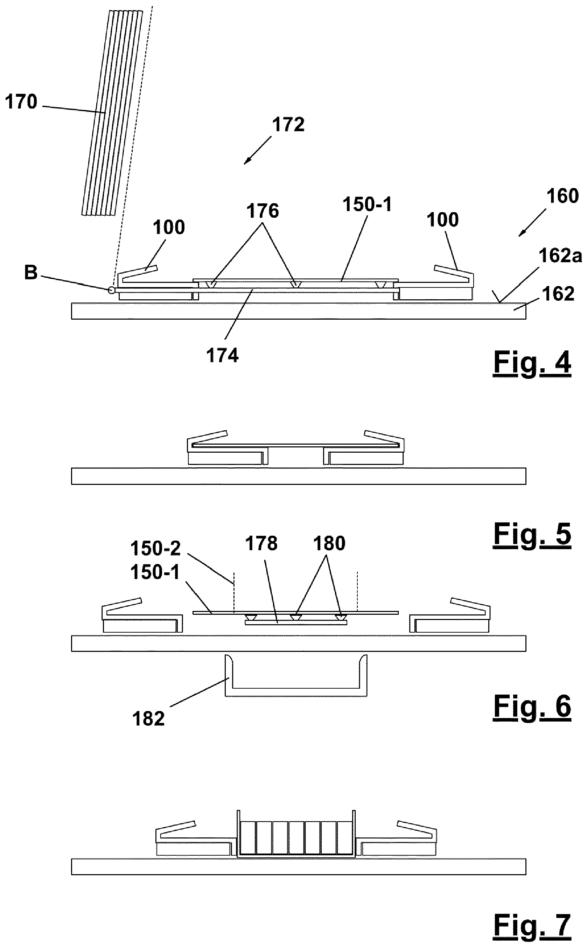

Gemäß Figur 1 umfasst die Transportvorrichtung 100 einen Mover 102 einer in Magnetschwebetechnologie ausgelegten Transportanordnung 160 (siehe Figur 4) und eine mit dem Mover 102 betriebsfest verbundene Auflage 104. Die betriebsfeste Verbindung kann eine lösbare Verbindung umfassen, die gewünschtenfalls einen Austausch der Auflage 104 ermöglicht. Es ist jedoch ebenso denkbar, dass die Auflage 104 dauerhaft mit dem Mover 102 verbunden ist.

In Magnetschwebetechnologie ausgelegte Transportanordnungen 160, wie sie an sich beispielsweise aus der US 2020/0030995 A1 bekannt sind, umfassen in an sich bekannter Weise einen im Wesentlichen flächig ausgebildeten Stator 162, der seinerseits eine Mehrzahl von Spulen zur Erzeugung eines elektromagnetischen Felds umfasst, sowie eine (nicht dargestellte) Steuereinheit zur Ansteuerung dieser Spulen. Die Mover 102 umfassen Permanentmagneten, welche mit dem vom Stator erzeugten elektromagnetischen Feld wechselwirken und von diesem entlang dessen Fläche und in begrenztem Maße auch orthogonal dazu bewegt werden können.

An dieser Stelle sei ausdrücklich darauf hingewiesen, dass nur der Mover 102 dieser Transportanordnung 160 zum Erfindungsgegenstand gehört, nicht aber der Stator 162 und dessen (nicht dargestellte) Steuereinheit.

Gemäß Figur 1 umfasst die Auflage 104 ein Basiselement 106, das der betriebsmäßig festen Verbindung mit dem Mover 102 dient. Die vom Mover 102 abgewandte obere Fläche 106a bildet eine Stützfläche 106a, auf der beim Transport eines Kartonzuschnitts 150-1 dieser Kartonzuschnitt 150-1 aufliegt (siehe auch Figur 2).

Die Auflage 104 umfasst ferner einen Sicherungsbügel 108 und einen Übergangsabschnitt 110, der den Sicherungsbügel 108 mit dem Basiselement 106 verbindet. Beim Transport eines Kartonzuschnitts 150-1 durch zwei erfindungsgemäße Transportvorrichtungen 100 wird der Kartonzuschnitt 150-1 durch zwei Anlageflächen 110a der Übergangsabschnitte 110 ergriffen, wobei der Sicherungsbügel ein unerwünschtes Abheben des Kartonzuschnitts 150-1 von der Stützfläche verhindert. Darüber hinaus schließt der Sicherungsbügel 108 mit dem Basiselement 106 einen Winkel α ein, der zwischen etwa 5° und etwa 25°, vorzugsweise etwa 15°, beträgt. Auf diese Weise bildet der Sicherungsbügel 108 eine Einweisungsschräge, die den Kartonzuschnitt 150-1 beim Zusammenfahren der beiden Transportvorrichtungen 100 zur Stützfläche 106a und damit auch zum Übergangsabschnitt 110 hin drängt. Die Anlagefläche 110a des Übergangsabschnitts 110 verfügt in dem dargestellten Ausführungsbeispiel über eine Höhe H, die derart bemessen ist, dass der Kartonzuschnitt 150-1 zwischen der Stützfläche 106a und dem Sicherungsbügel nicht eingeklemmt wird.

Auf der dem Übergangsabschnitt 110 gegenüberliegenden Seite des Basiselements 106 weist die Auflage 104 ferner eine vom Basiselement 106 ausgehende Schürze 112 auf, die sich seitlich des Movers 102 in Richtung auf die Transportfläche 162a des Stators 162 der Transportanordnung 160 zu erstreckt (vgl. Figur 4). Beim Transport eines fertig gefalteten Kartons 150-2 durch zwei erfindungsgemäße Transportvorrichtungen 100 wird der Karton 150-2 durch zwei Anlageflächen 112a der Schürze 112 ergriffen (siehe Figur 3).

Wie in Figur 1 durch gestrichelten Linien angedeutet ist, kann die Schürze 112 auch mehrteilig ausgebildet sein, wobei die einzelnen Teile 112`, 112" um im Wesentlichen orthogonal zur Stützfläche 106a verlaufende Achsen A', A" schwenkbar sind. Diese Weiterbildung erlaubt einen verbesserten Eingriff der Schürze 112 mit dem Karton 150-2.

Mit Bezug auf die Figuren 4 bis 7 soll nachstehend der Einsatz der erfindungsgemäßen Transportvorrichtungen 100 beim Transport von Kartonzuschnitten 150-1 bzw. daraus gefalteten Kartons 150-2 durch eine Verpackungsmaschine näher erläutert werden.

In einer in Figur 4 dargestellten ersten Station der Verpackungsmaschine werden die Kartonzuschnitte 150-1 aus einem Magazin 170 entnommen und der weiteren Verarbeitung zugeführt. In dem dargestellten Ausführungsbeispiel wird hierzu eine Ablegevorrichtung 172 mit wenigstens einem Ablegearm 174 eingesetzt, der um eine Schwenkachse B geschwenkt werden kann und zum Ergreifen des Kartonzuschnitts 150-1 mit Saugköpfen 176 ausgestattet ist.

In einer in Figur 4 gestrichelt dargestellten Stellung ergreift die Ablegevorrichtung 172 einen Kartonzuschnitt 150-1 und führt ihn aus der annähernd aufrechten Stellung in die in Figur 4 dargestellte, im Wesentlichen horizontale Stellung zwischen den auseinandergefahrenen Transportvorrichtungen 100 über.

In einem nächsten Schritt fahren die Transportvorrichtungen 100 zusammen, bis der Kartonzuschnitt 150-1 zwischen den Anlageflächen 110 a der Übergangsabschnitte 110 der Transportvorrichtungen 100 aufgenommen wurde. Nun könnten die Saugköpfe 176 der Ablegevorrichtung 172 deaktiviert werden, so dass der Kartonzuschnitt 150 von den Transportvorrichtungen 100 abtransportiert werden kann. Dieser Transportzustand ist in Figur 5 dargestellt.

In einer in Figur 6 dargestellten Faltstation der Verpackungsmaschine wird der Kartonzuschnitt 150-1 zuerst mittels einer höhenverstellbaren Kartonauflage 178, die mit Saugköpfen 180 ausgestattet ist, ergriffen. Sobald der Kartonzuschnitt 150-1 sicher gehalten ist, fahren die Transportvorrichtungen 100 auseinander, so dass der Kartonzuschnitt 150-1 mittels einer Faltmatrize 182 und einem (nicht dargestellten) oberen Stempel zu einem Karton 150-2 gefaltet werden kann. Im Vorfeld des Faltens können die Verbindungslaschen des Kartonzuschnitts noch mit Leim bestrichen werden. Alternativ kann die Verbindung der einzelnen Abschnitte des Kartons 150-2 auch durch Tackern oder dergleichen bewerkstelligt werden.

Bei den Verpackungsmaschinen der Anmelderin werden die Produkte üblicherweise vor dem Falten des Kartons auf den Kartonzuschnitt 150-1 aufgeschoben, so dass der Karton 150-2 um sie herum gefaltet wird. Grundsätzlich ist es jedoch auch denkbar, die Produkte erst nach dem Falten des Kartons 150-2 in diesen einzubringen.

Anschließend an das Falten des Kartons 150-2 fahren die Transportvorrichtungen 100 wieder zusammen, so dass die Transportvorrichtungen 100 den Karton 150-21 mit den Anlageflächen 112a der Schürzen 112 erfassen. Hierzu kann der Karton 150-2 mittels der höhenverstellbaren Kartonauflage 178 etwas abgesenkt worden sein. Sobald die Saugköpfe 180 deaktiviert wurden, kann der Karton 150-2 von den Transportvorrichtungen 100 abtransportiert werden. Dieser Zustand ist in Figur 7 dargestellt.

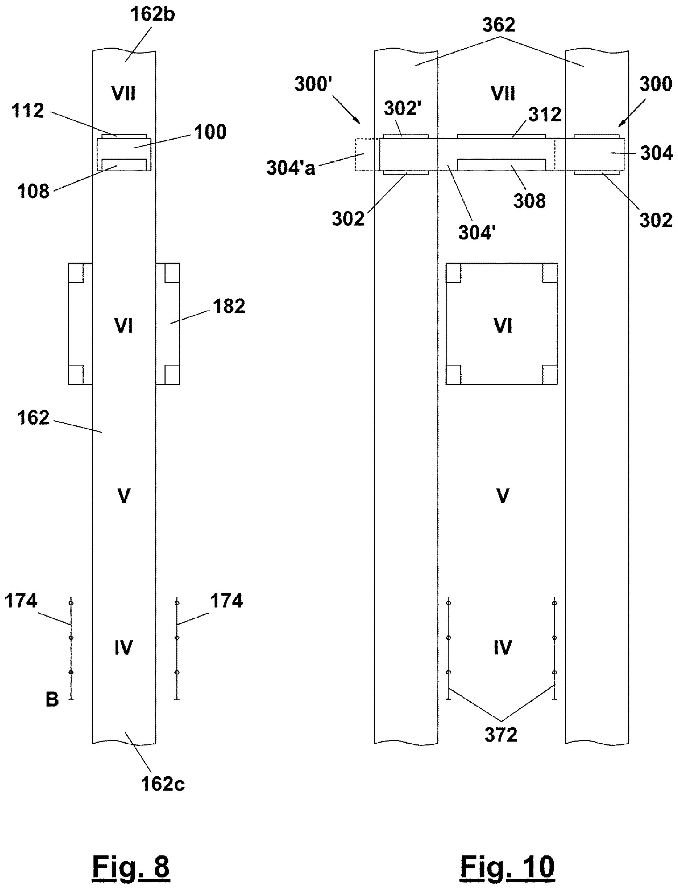

Figur 8 zeigt eine schematische Draufsicht auf die Verpackungsmaschine. Zentral erkennt man den Stator 162, auf dem sich die Transportvorrichtungen 100 bewegen können. Ein Abschnitt des Stators 162, der es ermöglicht, dass die Transportvorrichtungen 100 zur Bildung eines Kreislaufs von dessen in Figur 8 oberen Ende 162b zu dessen in Figur 8 unteren Ende 162c zurückgeführt werden können, ist in Figur 8 nicht dargestellt. Ferner sind die vorstehend mit Bezug auf die Figuren 4 bis 7 beschriebenen Stationen der Verpackungsmaschine durch die entsprechenden römischen Ziffern angedeutet.

In Figur 9 ist eine abgewandelte Ausführungsform einer erfindungsgemäßen Transportvorrichtung dargestellt. Die Transportvorrichtung der Figur 9 entspricht im Wesentlichen der Transportvorrichtung der Figur 1. Daher sind in Figur 9 analoge Teile mit den gleichen Bezugszeichen versehen wie in Figur 1, jedoch vermehrt um die Zahl 100. Darüber hinaus wird die Transportvorrichtung 200 im Folgenden nur insoweit beschrieben werden, als sie sich von der Transportvorrichtung 100 unterscheidet. Ansonsten sei hiermit ausdrücklich auf die Beschreibung der Transportvorrichtung 100 verwiesen.

Wie die Transportvorrichtung 100 verfügt auch die Transportvorrichtung 200 über einen Mover 202 und eine Auflage 204. Sie unterscheidet sich von der Transportvorrichtung 100 lediglich dadurch, dass die Schürze 212 an ihrem unteren Ende 212b eine Schulter 212c aufweist, die sich im Wesentlichen parallel zum Basiselement 206 erstreckt. Eine obere Fläche 212c1 der Schulter 212c dient nach dem Falten des Kartons für diesen als Auflagefläche, so dass beim Transport des Kartons, insbesondere des mit Produkten gefüllten Kartons, wie er in den Figuren 3 und 7 dargestellt ist, nicht die Gefahr besteht, dass der Karton auf dem Stator schleift.

In Figur 10 ist eine weitere abgewandelte Ausführungsform einer erfindungsgemäßen Transportvorrichtung dargestellt. Die Transportvorrichtung der Figur 10 entspricht in weiten Teilen der Transportvorrichtung der Figur 1. Daher sind in Figur 10 analoge Teile mit den gleichen Bezugszeichen versehen wie in Figur 1, jedoch vermehrt um die Zahl 200. Darüber hinaus wird die Transportvorrichtung 200 im Folgenden nur insoweit beschrieben werden, als sie sich von der Transportvorrichtung 100 unterscheidet. Ansonsten sei hiermit ausdrücklich auf die Beschreibung der Transportvorrichtung 100 verwiesen.

Im Unterschied zur Transportvorrichtung 100 umfasst die Transportvorrichtung 300 zwei Mover 302, die durch eine brückenartige Auflage 304 miteinander verbunden sind. Die Mover 302 bewegen sich auf wenigstens zwei voneinander getrennten Statorbereichen 362, während die Funktionsbaugruppen, nämlich die Ablegevorrichtung 372 und die Faltmatrize 382, zwischen den beiden Statorbereichen 362 angeordnet sind. Dementsprechend sind auch der Sicherungsbügel 308 und die Schürze 312 in einem zwischen den Movern 302 angeordneten Abschnitt der Auflage 304 angeordnet.

Wie dies in Figur 10 mit gestrichelten Linien angedeutet ist, ist es grundsätzlich auch denkbar, die Transportvorrichtung nicht als brückenartige Transportvorrichtung 300 mit zwei Movern 302 auszubilden, sondern als auslegerartige Transportvorrichtung 300' mit nur einem Mover 302`. Gegebenenfalls kann es erforderlich sein, die Auflage 304` mit einem Gegengewichtabschnitt 304'a auszubilden. Hierdurch kann vermieden werden, dass zu hohe seitliche Kippmomente auf den einen Mover 302' ausgeübt werden.

## Patentansprüche

1. Transportvorrichtung (100) für Kartonzuschnitte (150-1) und aus diesen gefaltete Kartons (150-2),
**dadurch gekennzeichnet, dass** sie wenigstens einen für den Einsatz in einer in Magnetschwebetechnologie ausgeführten Transportanordnung ausgelegten Mover (102) und eine mit dem Mover (102) betriebsmäßig fest verbundene Auflage (104) umfasst,
wobei die Auflage (104) ein Basiselement (106) mit einer im Wesentlichen horizontalen, nach oben weisenden Stützfläche (106a) aufweist,
wobei die Auflage (104) ferner wenigstens einen mit dem Basiselement (106) verbundenen Sicherungsbügel (108) aufweist, und
wobei an dem Basiselement (106) ferner wenigstens eine Schürze (112) angeordnet ist, die sich unterhalb der Stützfläche (106a) erstreckt,
so dass die Transportvorrichtung (100) im Zusammenwirken mit wenigstens einer weiteren, identisch ausgebildeten Transportvorrichtung sowohl geeignet ist, einen flächigen Kartonzuschnitt (150-1) zu transportieren, als auch geeignet ist, einen aus dem Kartonzuschnitt (150-1) errichteten Karton (150-2) zu transportieren.

2. Transportvorrichtung nach Anspruch 1,
**dadurch gekennzeichnet, dass** der Sicherungsbügel (108) schräg nach oben verläuft.

3. Transportvorrichtung nach Anspruch 2,
**dadurch gekennzeichnet, dass** der Winkel (α), den der Sicherungsbügel (108) und die Stützfläche (106a) miteinander einschließen, zwischen etwa 5° und etwa 25°, vorzugsweise etwa 15°, beträgt.

4. Transportvorrichtung nach einem der Ansprüche 1 bis 3,
**dadurch gekennzeichnet, dass** ein Übergangsabschnitt (110) zwischen der Stützfläche (106a) und dem Sicherungsbügel (108) eine stumpfe Anlagefläche (110a) aufweist.

5. Transportvorrichtung nach Anspruch 4,
**dadurch gekennzeichnet, dass** die Höhe (H) der Anlagefläche (110a) wenigstens 5 mm, vorzugsweise wenigstens 8 mm. beträgt.

6. Transportvorrichtung nach einem der Ansprüche 1 bis 5,
**dadurch gekennzeichnet, dass** die Schürze (112) an der Seite des Basiselements (106) angeordnet ist, in deren Richtung die offene Seite der von Stützfläche (106a) und Sicherungsbügel (108) gebildeten V-Form weist.

7. Transportvorrichtung nach einem der Ansprüche 1 bis 6,
**dadurch gekennzeichnet, dass** die Schürze (112) mehrteilig ausgebildet ist, wobei vorzugsweise wenigstens ein Schürzenteil (112`, 112") mit dem Basiselement (106) beweglich verbunden ist.

8. Transportvorrichtung nach einem der Ansprüche 1 bis 7,
**dadurch gekennzeichnet, dass** die Stützfläche (106a) und/oder der Sicherungsbügel (108) und/oder der Übergangsabschnitt (110) und/oder die Schürze (112) eine reibungserhöhende Beschichtung aufweist/aufweisen.

9. Transportvorrichtung nach einem der Ansprüche 1 bis 8,
**dadurch gekennzeichnet, dass** die Auflage (104) aus einem nicht magnetischen und vorzugsweise auch nicht magnetisierbaren Material gefertigt ist.

10. Transportvorrichtung nach einem der Ansprüche 1 bis 8,
**dadurch gekennzeichnet, dass** die Auflage (104) ein, vorzugsweise dünnes, magnetisierbares Blech umfasst oder aus einem, vorzugsweise dünnen, magnetisierbaren Blech gefertigt ist.

11. Auflage (104), die dazu ausgelegt und bestimmt ist, betriebsfest mit einem für den Einsatz in einer in Magnetschwebetechnologie ausgeführten Transportanordnung ausgelegten Mover (102) verbunden zu werden, mit wenigstens einem Auflagemerkmal eines der vorhergehenden Ansprüche.
